# EUROPEAN PATENT SPECIFICATION

(11) **EP 4 467 789 B1**
(45) Date of publication and mention of the grant of the patent: **08.10.2025**
(21) Application number: 23461595.3
(22) Date of filing: 23.05.2023
(51) Int. Cl.: F02C 3/22, F02C 7/224, F02C 6/00

(54) **HYDROGEN FUEL SYSTEM ARCHITECTURE WITH OXYGEN SEPARATION AND SUPERHEATING**
WASSERSTOFFBRENNSTOFFSYSTEMARCHITEKTUR MIT SAUERSTOFFTRENNUNG UND ÜBERHITZUNG
ARCHITECTURE DE SYSTÈME DE CARBURANT À HYDROGÈNE AVEC SÉPARATION D'OXYGÈNE ET SURCHAUFFE

(43) Date of publication of application: 27.11.2024
(60) Divisional application: 24163631.5
(73) Proprietor: Hamilton Sundstrand Corporation, Charlotte, NC 28217 (US)
(72) Inventor: Kruczek, Grzegorz, 51-317 Wroclaw (PL); RIDOUANE, El Hassan, Cork City (IE); CAO, Changmin, Cork City (IE)
(74) Representative: Dehns

(56) References cited:
- JP-A- H0 450 435
- KR-A- 20200 033 434
- US-A- 3 237 400
- US-A1- 2004 149 503
- US-B1- 11 603 798

## Description

### FIELD

The subject-matter disclosed herein relates to hydrogen fuel systems, and in particular to hybrid fuel cell gas turbine systems.

### BACKGROUND

There is an increasing pressure on the aerospace industry to switch the primary fuel for aircraft from hydrocarbons to more sustainable energy sources such as hydrogen. Hybrid fuel cell gas turbine systems, for example, comprise low-temperature fuel cells (e.g. proton exchange membrane fuel cells (PEMFCs)) that can increase fuel-to-electricity conversion efficiency and lower emissions of greenhouse gases. However, it is desirable to further increase efficiency and reduce emissions of these systems. The examples disclosed herein relate to such hydrogen fuel systems.

US 11603798 discloses a hydrogen fuel system for an aircraft. The aircraft engine includes a burner section and a turbine section arranged along a shaft, wherein an exhaust from the burner section is directed through the turbine section to drive rotation of the turbine section. A condenser assembly is arranged downstream of the turbine section. A cryogenic fuel source is configured to supply hydrogen and oxygen to the burner section along a fuel line passing through the condenser assembly so as to condense water from the exhaust from the burner section.

### SUMMARY

According to a first aspect of the invention, there is provided a system comprising: a gas turbine having a combustion chamber and a turbine, the gas turbine being configured to receive a stream of gaseous oxygen and a stream of gaseous hydrogen, and to output a stream of flue gas; a superheating heat exchanger configured to receive the stream of flue gas from the turbine and at least one of the stream of gaseous hydrogen and the stream of gaseous oxygen, wherein the superheating heat exchanger is configured to transfer heat between the stream of flue gas and the stream of gaseous hydrogen and/or the stream of gaseous oxygen to superheat the stream of hydrogen and/or the stream of oxygen; wherein the system is configured to direct the stream of hydrogen and the stream of oxygen to the combustion chamber, and wherein at least one of the stream of hydrogen and the stream of oxygen is superheated; a water recovery heat exchanger configured to receive the stream of flue gas from the turbine,wherein the system is configured to direct the stream of flue gas to the water recovery heat exchanger via the superheating heat exchanger; and wherein the water recovery heat exchanger is configured to receive the stream of flue gas and a stream of ambient air, and configured to transfer heat from the stream of flue gas to the stream of ambient air to yield a stream of water; wherein the system is configured to direct the stream of water to a cooling system for the combustion chamber and/or the turbine.

According to a second aspect of the invention, there is provided a method comprising: combusting a stream of gaseous oxygen and a stream of gaseous hydrogen in a combustion chamber of a gas turbine; directing a stream of flue gas from the turbine and at least one of the stream of gaseous hydrogen and the stream of gaseous oxygen to a superheating heat exchanger; transferring heat, using the superheating heat exchanger, between the stream of flue gas and the stream of gaseous hydrogen and/or the stream of gaseous oxygen to superheat the stream of hydrogen and/or the stream of oxygen; directing the stream of hydrogen and the stream of oxygen to the combustion chamber, wherein at least one of the stream of hydrogen and the stream of oxygen is superheated; directing a stream of flue gas from the superheating heat exchanger and a stream of ambient air to a water recovery heat exchanger, wherein the water recovery heat exchanger transfer heat from the stream of flue gas to the stream of ambient air to yield a stream of water; and directing the stream of water to a cooling system for the combustion chamber of the gas turbine and/or the turbine of the gas turbine.

### BRIEF DESCRIPTION OF THE DRAWINGS

Figure 1 shows a first example of a hydrogen fuel system architecture.
Figure 2 shows a second example of a hydrogen fuel system architecture.
Figure 3 shows a third example of a hydrogen fuel system architecture.

### DETAILED DESCRIPTION

There is an increasing pressure on the aerospace industry to switch the primary fuel used for aircraft from hydrocarbons to more sustainable energy sources such as hydrogen. This, however, brings many challenges. The systems described herein aim to take advantage of the new technologies of cryogenic compressed hydrogen and liquid hydrogen storage. In particular, the new systems described herein utilise the chill that is associated with cryogenic fluid.

The new systems described herein envision a way to use liquid H₂ onboard an aircraft as an additional heat sink to separate oxygen and nitrogen from part of the air. More specifically the systems use a new architecture of hybrid gas turbine and fuel cell operation with an oxygen and nitrogen separation process.

In order to reach a manageable H₂ volume, it must either be highly compressed and cooled (between 300-850 bar and <78K) or cryogenically cooled to liquid state (~-253°C = ~20K). The use of liquid hydrogen (LH) is more promising in terms of weight and volume when compared to compressed hydrogen (CH) and represents the only way to enable hydrogenbased short and medium range and bigger type of aircrafts.

The low storage temperature of liquid hydrogen fuel allows it to be used to cool air to condense oxygen and effectively separate it from nitrogen. Advantageously, the separated oxygen can be combusted with hydrogen in oxy-fuel combustion at very high temperatures which increases the efficiency of gas turbine. The absence of nitrogen in the combustion chamber avoids the generation of harmful emissions. Furthermore, the separated nitrogen can be used as a cooling medium (e.g. for cooling one or more of a tank of liquid hydrogen fuel, electronics, superconducting electronics, turbine blades, etc), as a fire suppression agent, and/or as a neutral gas for fire protection.

Thus, the described configurations allow for the use of high efficiency oxy-fuel combustion and additionally the production of nitrogen which can be used as a fire suppressant or fire protection gas. Part of the hydrogen that was used to condense oxygen is combusted in a combustion chamber along with oxygen and the rest, along with a second portion of air, may optionally also be used in fuel cell for a hybrid fuel cell gas turbine configuration.

The separation process of the new systems described herein are possible due to the fact that the oxygen boiling point is at 90.2K which is significantly higher than temperature of liquid hydrogen (~20K). Moreover, the nitrogen boiling point is at 77.4K which gives a range of temperatures where liquid oxygen and gaseous nitrogen exist (77.4K to 90.2K).

For improved functioning of the hydrogen-engine, or improved functioning of a fuel cell, the hydrogen fuel needs to reach higher temperatures (> 0°C = 273K). The described configurations provide a means to increase the hydrogen temperature, whilst simultaneously producing high purity oxygen (e.g. comprising at least 95 mol.% oxygen) for oxy-fuel combustion.

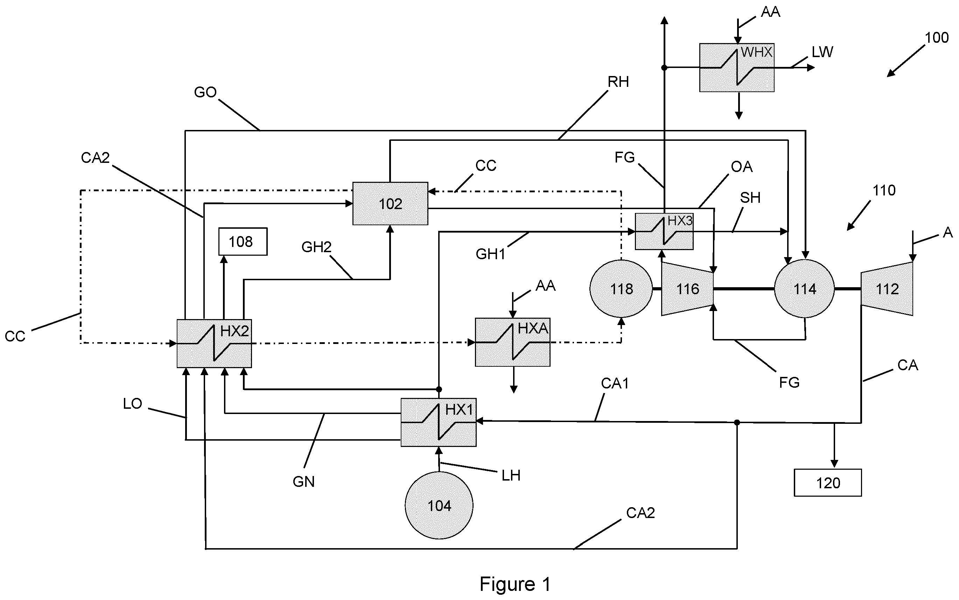

An architecture for a hydrogen fuel system 100 is shown in Figure 1. The hydrogen fuel system 100 shown in Figure 1 is a hybrid fuel cell gas turbine system comprising a fuel cell 102 and a gas turbine engine 110. In the example shown in Figure 1, the hydrogen fuel system 100 is arranged in an aircraft (not shown) to provide electricity and propulsion to the aircraft.

As shown in Figure 1, the hydrogen fuel system 100 comprises a tank 104 as a source of liquid hydrogen LH. As also shown in Figure 1, the hydrogen fuel system 100 comprises a compressor 112 configured to compress air A, such as ambient air or bleed air, to provide a stream of compressed air CA.

The hydrogen fuel system 100 comprises at least a first (oxygen condensing) heat exchanger HX1, a second (oxygen heating/evaporating) heat exchanger HX2, and a third (superheating) heat exchanger HX3.

The first heat exchanger HX1 is configured to receive a first stream of compressed air CA1 (a first portion of the stream of compressed air CA from the compressor 112) and a stream of liquid hydrogen LH from the tank 104. The first heat exchanger HX1 is configured to transfer heat between the first stream of compressed air CA1 and the stream of liquid hydrogen LH to yield a stream of liquid oxygen LO and a stream of gaseous hydrogen GH.

Valves (not shown) regulate the rate of flow of the first stream of compressed air CA1 and rate of flow of the stream of liquid hydrogen LH to the first heat exchanger HX1. The rate of flow of the first stream of compressed air CA1 is selected based on an oxygen demand of the gas turbine engine 110. The rate of flow of the stream of liquid hydrogen LH is selected based on a combined hydrogen demand of the fuel cell 102 and the gas turbine engine 110.

The second heat exchanger HX2 is configured to receive at least the stream of liquid oxygen LO and a second stream of compressed air CA2 (a second portion of the stream of compressed air CA from the compressor 112). The second heat exchanger HX2 is configured to transfer heat between the second stream of compressed air CA2 and the stream of liquid oxygen LO to yield a stream of gaseous oxygen GO.

The gas turbine engine 110 comprises a combustion chamber 114 and a turbine 116. The hydrogen fuel system 100 is configured to provide the combustion chamber 114 with a stream of oxygen and a stream of hydrogen (discussed further below). The hydrogen fuel system 100 is further configured to direct a stream of (hot) flue gas FG, generated from the combustion of the oxygen and hydrogen within the combustion chamber 114, from the combustion chamber 114 to the turbine 116. As the combustion chamber 114 utilises oxy-fuel combustion, the hot flue gas FG is substantially composed of superheated steam.

In the example shown in Figure 1, the third heat exchanger HX3 is (a hydrogen superheating heat exchanger) configured to receive the stream of flue gas FG from the turbine 116 and a first stream of gaseous hydrogen GH1 (a first portion of the stream of gaseous hydrogen GH from the first heat exchanger HX1). The third heat exchanger HX3 is configured to transfer heat between the stream of flue gas FG and the first stream of gaseous hydrogen GH1 to superheat the stream of hydrogen (e.g. to yield a stream of superheated hydrogen SH). The system 100 is configured to direct the stream of superheated hydrogen SH and the stream of gaseous oxygen GO to the combustion chamber 114.

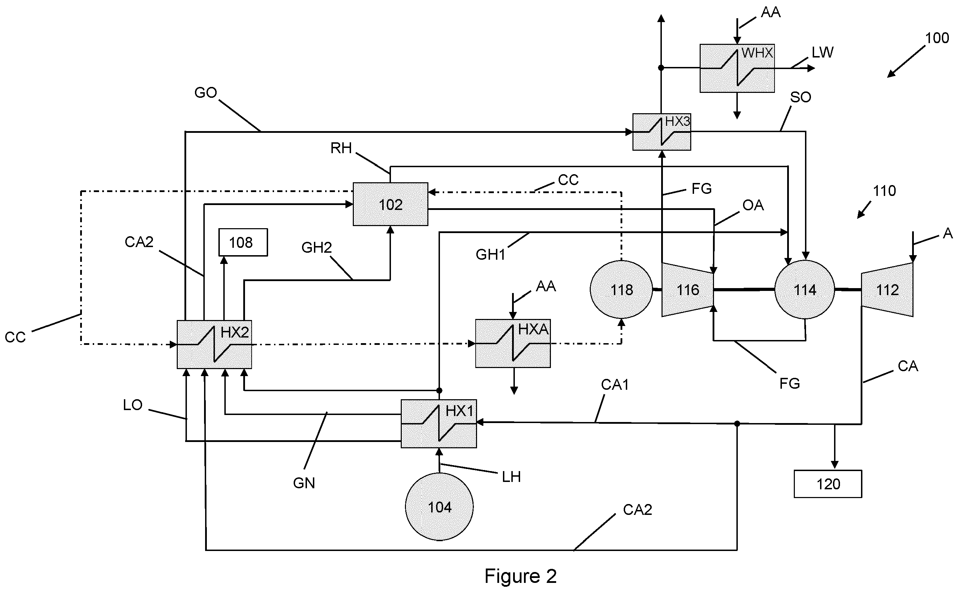

In the alternative example shown in Figure 2, the third heat exchanger HX3 is instead (a oxygen superheating heat exchanger) configured to receive the stream of flue gas FG from the turbine 116 and the stream of gaseous oxygen GO. The third heat exchanger HX3 is configured to transfer heat between the stream of flue gas FG and the stream of gaseous oxygen GO to superheat the stream of oxygen (e.g. to yield a stream of superheated oxygen SO). The system 100 is configured to direct the stream of superheated oxygen GO and the first stream of gaseous hydrogen GH1 to the combustion chamber 114.

It should be understood that the hydrogen fuel system 100 of Figure 1 may comprise an additional (fourth) heat exchanger similar to the third heat exchanger HX3 of the system 100 of Figure 2 (e.g. a oxygen superheating heat exchanger, configured to receive a stream of flue gas FG and the stream of gaseous oxygen GO, and to transfer heat between the two). Said fourth heat exchanger may be configured in parallel with the third heat exchanger HX3, so as to receive a portion of the stream of flue gas FG from the turbine 116, or in series with the third heat exchanger HX3 to receive the stream of flue gas FG upstream of or downstream from the third heat exchanger HX3.

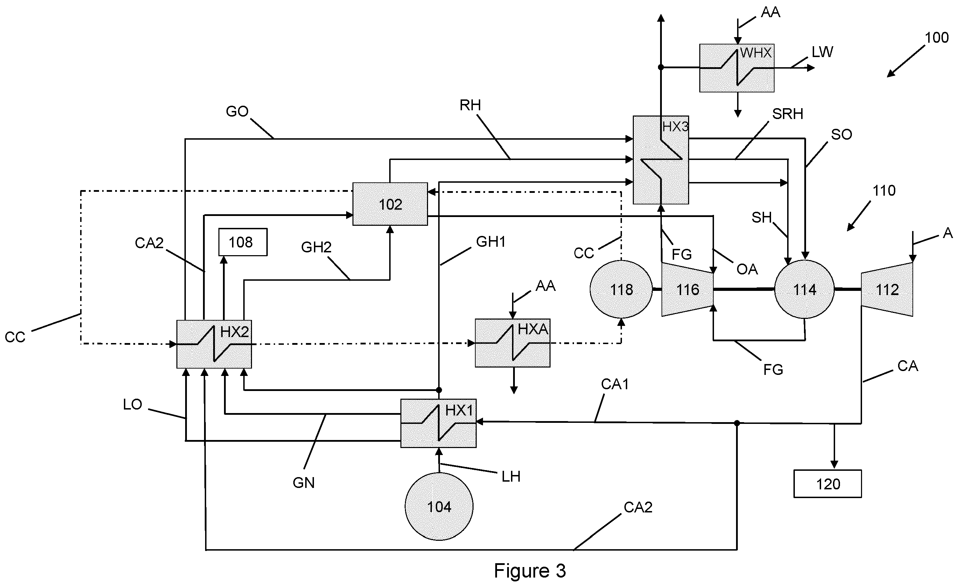

In the further alternative example shown in Figure 3, the third heat exchanger HX3 is (a hydrogen-oxygen superheating heat exchanger) configured to receive at least a stream of flue gas FG from the turbine 116, a first stream of gaseous hydrogen GH1 (a first portion of the stream of gaseous hydrogen GH from the first heat exchanger HX1), and the stream of gaseous oxygen GO. In this example, the third heat exchanger HX3 is configured to transfer heat between the stream of flue gas FG and the first stream of gaseous hydrogen GH1 and the stream of gaseous oxygen GO to superheat the stream of hydrogen and the stream of oxygen (e.g. to yield a stream of superheated hydrogen SH and a stream of superheated oxygen SO). The system 100 is configured to direct the stream of superheated hydrogen SH and the stream of superheated oxygen SO to the combustion chamber 114.

It will be appreciated that in the example shown in Figure 3 the first stream of gaseous hydrogen GH1 and the stream of gaseous oxygen GO may optionally be mixed prior to entering the third heat exchanger HX3.

In the examples shown in Figures 1-3, the hybrid system 100 is configured to direct a second stream of gaseous hydrogen GH2 (a second portion of the stream of gaseous hydrogen GH from the first heat exchanger HX1) to the fuel cell 102.

The fuel cell 102 is configured to receive the second stream of gaseous hydrogen GH2 from the first heat exchanger HX1 and the second stream of compressed air CA2 from the second heat exchanger HX2. However, compressed air may be supplied to the fuel cell 102 from other sources.

A conversion ratio of the fuel cell 102 may be in the range of 0.8-0.98, such that a stream of residual hydrogen RH is output from the fuel cell 102. As shown in the example in Figure 1, the hydrogen fuel system 100 may be configured to direct the stream of residual hydrogen RH (e.g. hydrogen that is not utilised in the fuel cell reaction) to the combustion chamber 114. Alternatively (as shown in Figure 3), the hydrogen fuel system 100 may be arranged to direct the stream of residual hydrogen RH to the third heat exchanger HX3 to superheat the stream of residual hydrogen (e.g. to yield a stream of superheated residual hydrogen SRH), and then to direct the stream of superheated residual hydrogen SRH to the combustion chamber 114 to be used in combustion.

In another alternative example not shown in the Figures, the hydrogen fuel system 100 comprises a fifth heat exchanger, which is (a residual hydrogen superheating heat exchanger) configured to receive a stream of flue gas FG from the turbine and the stream of residual hydrogen RH from the fuel cell 102, and configured to transfer heat between the stream of flue gas FG and the stream of residual hydrogen RH to superheat the residual hydrogen (e.g. to yield the stream of superheated residual hydrogen SRH). Said fifth heat exchanger may be arranged in parallel with the third heat exchanger HX3 and fourth heat exchanger, so as to receive a portion of the stream of flue gas FG from the turbine 116, or in series with the third heat exchanger HX3 and fourth heat exchanger to receive the stream of flue gas FG upstream of or downstream from the third heat exchanger HX3 or fourth heat exchanger.

The hydrogen fuel system 100 may be configured to direct a stream of outlet air OA (e.g., air that is not utilised in the fuel cell reaction) from the fuel cell 102 to the turbine 116 of the gas turbine engine 110.

As shown in Figures 1-3, the hydrogen fuel system 100 may comprise a water recovery heat exchanger WHX configured to receive a stream of flue gas FG from the turbine 116 and a stream of ambient air AA, wherein the water recovery heat exchanger WHX is configured to transfer heat from the stream of flue gas FG to the stream of ambient air AA to yield a stream of water LW. The water recovery heat exchanger WHX may be arranged to receive the stream of flue gas FG from the turbine 116 via other heat exchangers of the system 100. For example, as shown in Figure 1, the water recovery heat exchanger WHX is arranged to receive the stream of flue gas (directly) from the third (hydrogen superheating) heat exchanger HX3. As shown in Figure 2, the water recovery heat exchanger WHX is arranged to receive the stream of flue gas (directly) from the third (oxygen superheating) heat exchanger HX3. As shown in Figure 3, the water recovery heat exchanger WHX is arranged to receive the stream of flue gas (directly) from the third (hydrogen-oxygen superheating) heat exchanger HX3.

In hydrogen fuel systems having fourth heat exchangers and fifth heat exchangers as described above, the water recovery heat exchanger WHX may be arranged to receive the stream of flue gas from at least one of the third heat exchanger, the fourth heat exchanger and the fifth heat exchanger. The third heat exchanger, fourth heat exchanger and fifth heat exchanger may be arranged in the flue gas stream in series or in parallel.

The system may be configured to direct the stream of water to a cooling system for the combustion chamber and/or the turbine. For example, a cooling system of the turbine may utilise the (liquid) water by injecting the water through inner channels of the turbine blades.

In another example, a cooling system of the combustion chamber may utilise the water by injecting the water into the combustion chamber to lower the flame temperature.

As shown in Figures 1-3, the hybrid system 100 comprises a coolant circuit CC configured to absorb heat from components of the gas turbine 110 and/or the fuel cell 102 into a working fluid within the coolant circuit CC. For example, as shown in Figures 1-3, the coolant circuit CC is configured to convey a flow of working fluid to control the temperature of (e.g. cool) the fuel cell 102 and an electric motor 118 coupled to the gas turbine engine 110.

The coolant circuit CC comprises an ambient heat exchanger HXA. The ambient heat exchanger HXA is configured to transfer heat between the working fluid of the coolant circuit CC and the ambient atmosphere (e.g. to reject heat from the coolant circuit CC to the ambient atmosphere to cool the working fluid).

In the examples shown in Figures 1-3, the coolant circuit CC comprises the second heat exchanger HX2. Accordingly, the second heat exchanger HX2 is configured to transfer heat between the coolant circuit CC and at least one of the fluid streams in the second heat exchanger HX2. For example, the second heat exchanger HX2 may be configured to transfer heat between the coolant circuit CC and one or more of the second (portion of the) stream of gaseous hydrogen GH2, the stream of liquid oxygen LO, the second stream of compressed air CA2, and the stream of gaseous nitrogen GN.

In addition to generating a stream of liquid oxygen LO from the first stream of compressed air CA1, the first heat exchanger HX1 may be configured to generate a stream of gaseous nitrogen GN from the first stream of compressed air CA1. In other words, the first heat exchanger HX1 may be configured to transfer heat between the first stream of compressed air CA1 and the stream of liquid hydrogen LH to yield a stream of liquid oxygen LO, a stream of gaseous hydrogen GH, and a stream of gaseous nitrogen GN.

As shown in Figures 1-3, the system 100 is configured to direct the stream of gaseous nitrogen GN to the second heat exchanger HX2, and the second heat exchanger HX2 is configured to transfer heat between the stream of gaseous nitrogen GN and at least one of the other streams (e.g. the stream of liquid oxygen LO and/or the second stream of compressed air CA2) in the second heat exchanger HX2.

Alternatively, or additionally, the stream of gaseous nitrogen GN may be directed to a fire suppression system 108 (e.g. for use as a fire suppression or prevention agent). For this use, the stream of gaseous nitrogen GN should contain less than 15 mol.% oxygen, which is the maximum oxygen content that can still extinguish a fire. In various embodiments, the stream of gaseous nitrogen GN may contain less than 5 mol.% oxygen, or less than 1 mol.% oxygen.

Alternatively, or additionally, the stream of gaseous nitrogen GN may be directed to the tank 104 of liquid hydrogen to provide/aid in temperature control (e.g. cooling) of the tank 104. Similarly, the stream of gaseous nitrogen GN may be directed to (superconducting) electronic components of the aircraft, and/or directed to the turbine blades of the turbine, to provide/aid in temperature control (e.g. cooling) of these components.

For example, the system 100 could be configured to direct the stream of gaseous nitrogen GN from the first heat exchanger HX1 to the tank 104 for temperature control of the tank 104, and then from the tank 104 to the second heat exchanger HX2, wherein the second heat exchanger HX2 is configured to transfer heat between the stream of gaseous nitrogen GN and at least one of the streams (e.g. the stream of liquid oxygen LO and/or the second stream of compressed air CA2) in the second heat exchanger HX2, and then from the second heat exchanger HX2 to the fire suppression system 108.

A method of operating the hydrogen fuel system 100 will now be described with reference to the Figures.

Firstly, the method comprises directing a first stream of compressed air CA1 to the first heat exchanger HX1. The compressor 112 may be used to generate a stream of compressed air CA by compressing a stream of air A (for example) to approximately 2.5 bar absolute pressure. Depending on the ambient conditions, the temperature of the compressed air after leaving the compressor 112 may range from 30-220°C. Next, most (approximately 80%) of the stream of compressed air CA is diverted to an environmental control system 120. The remaining stream of compressed air is split into a first stream of compressed air CA1 (approximately 40% of the stream of compressed air CA) and a second stream of compressed air CA2 (approximately 60% of the stream of compressed air CA).

In addition to directing the first stream of compressed air CA1 to the first heat exchanger HX1, a stream of liquid hydrogen LH is directed to the first heat exchanger HX1. The stream of liquid hydrogen LH may be provided from a source of liquid hydrogen such as a tank 104. The hydrogen stored within has been cryogenically cooled to liquid state (~-253°C = ~20K).

To raise the temperature of the stream of liquid hydrogen LH and evaporate it to yield a stream of gaseous hydrogen GH, the first heat exchanger HX1 transfers heat between the first stream of compressed air CA1 and the stream of liquid hydrogen LH. The first stream of compressed air CA1 is thereby cooled to condense the oxygen in the compressed air and a stream of liquid oxygen LO is separated out, leaving behind a stream of gaseous nitrogen GN. The outlet temperature of the stream of liquid oxygen LO and the stream of gaseous nitrogen GN is in the range of 77.4-90.2K.

After leaving first heat exchanger HX1, the stream of gaseous hydrogen GH is split into a first portion and a second portion: a first (portion of the) stream of gaseous hydrogen GH1 is directed to the combustion chamber 114 via the third heat exchanger HX3, and a second (portion of the) stream of gaseous hydrogen GH2 is directed to the fuel cell 102 via the second heat exchanger HX2.

After leaving the first heat exchanger HX1, the stream of liquid oxygen LO and the stream of gaseous nitrogen GN are directed to a second heat exchanger HX2. The second stream of compressed air CA2 is also directed to the second heat exchanger HX2. As shown in Figures 1-3, the second heat exchanger HX2 also forms part of a coolant circuit CC.

The coolant circuit CC is arranged in a heat exchange relationship with components of the gas turbine engine and components of the fuel cell, such that the working fluid circulating in the coolant circuit CC absorbs heat from these components. Conventionally, this heat in the coolant circuit CC is rejected/transferred, in the ambient heat exchanger HXA, to a stream of ambient air AA. However, in the described systems, the heat in the coolant circuit CC can be utilised in the second heat exchanger HX2. Thus, in the second heat exchanger HX2, heat is transferred between the coolant circuit CC and the streams of liquid oxygen LO, gaseous hydrogen GH2, compressed air CA2, and gaseous nitrogen GN in order to yield a stream of gaseous oxygen GO and to control and/or stabilise the temperature of each of the streams of gaseous hydrogen GH2, compressed air CA2, and gaseous nitrogen GN depending on its particular requirements.

For example, the streams of liquid oxygen LO and gaseous nitrogen GN may be used to cool the temperature of the compressed air CA2, because, to be used in the fuel cell 102, the air optimally should be in the operating range of 0-95°C. Then, the stream of gaseous oxygen GO in the second heat exchanger HX2 may be heated by the coolant circuit CC so that it is at an optimal temperature for combustion.

With reference to Figure 1, the stream of hot flue gas FG (from the turbine 116) and the first stream of gaseous hydrogen GH1 (from the first heat exchanger HX1) are directed to the third heat exchanger HX3. Thus, in the third heat exchanger HX3, heat is transferred between the stream of flue gas FG and the stream of gaseous hydrogen GH1 in order to superheat the stream of hydrogen. Then, the stream of superheated hydrogen SH (from the third heat exchanger HX3) and the stream of gaseous oxygen GO (from the second heat exchanger HX2) are directed to the combustion chamber 114 to be combusted.

With reference to Figure 2, the stream of hot flue gas FG (from the turbine 116) and the stream of gaseous oxygen GO (from the second heat exchanger HX2) are directed to the third heat exchanger HX3. Thus, in the third heat exchanger HX3, heat is transferred between the stream of flue gas FG and the stream of gaseous oxygen GO in order to superheat the stream of oxygen. Then, the stream of gaseous hydrogen GH1 (from the first heat exchanger HX1) and the stream of superheated oxygen SO (from the third heat exchanger HX3) are directed to the combustion chamber 114 to be combusted.

With reference to Figure 3, the stream of hot flue gas FG (from the turbine 116), the stream of gaseous oxygen GO (from the second heat exchanger HX2), and the first stream of gaseous hydrogen GH1 (from the first heat exchanger HX1) are directed to the third heat exchanger HX3. Thus, in the third heat exchanger HX3, heat is transferred between the stream of flue gas FG, and the stream of gaseous oxygen GO and the stream of gaseous hydrogen GH1, in order to superheat the stream of hydrogen and the stream of oxygen. Then, the superheated streams SH, SO are directed to the combustion chamber 114 to be combusted.

In examples comprising a third heat exchanger HX3 and a fourth heat exchanger (not shown), a stream of flue gas FG and the first stream of gaseous hydrogen GH1 are directed to the third heat exchanger, and a stream of flue gas FG and the stream of gaseous oxygen GO are directed to the fourth heat exchanger. The stream of flue gas FG may be directed to the fourth heat exchanger either from the turbine 116 or from the third heat exchanger HX3. Then, the stream of superheated hydrogen SH (from the third heat exchanger HX3) and the stream of superheated oxygen SO (from the fourth heat exchanger) are directed to the combustion chamber 114 to be combusted.

Thus, the gaseous oxygen GO and the gaseous hydrogen GH may be combusted in the combustion chamber 114 to yield a stream of (hot) flue gas FG. The stream of flue gas FG is directed to the turbine 116 to be utilised by the turbine 116 to generate mechanical and/or electrical power.

After leaving the second heat exchanger HX2, the stream of compressed air CA2 is directed to the fuel cell 102. The fuel cell 102 utilises the stream of compressed air CA2 and the second stream of gaseous hydrogen GH2 to generate electricity. The fuel cell conversion ratio may be in the range of 0.8-0.98, such that there is residual hydrogen from the fuel cell 102 that is not used in the fuel cell conversion process. This stream of residual hydrogen RH is directed to the combustion chamber 114 to be used in combustion.

Alternatively (as shown in Figure 3), the stream of residual hydrogen RH is first directed to the third heat exchanger HX3 to superheat the stream of residual hydrogen RH, and then the stream of superheated residual hydrogen SRH is directed to the combustion chamber 114 to be used in combustion. In another alternative example (not shown), the stream of residual hydrogen RH is first directed to a fifth heat exchanger to superheat the stream of residual hydrogen RH, and then the stream of superheated residual hydrogen SRH is directed to the combustion chamber 114 to be used in combustion.

Similarly, air that is not used as part of the fuel cell conversion process is directed as a stream of outlet air OA to the turbine 116.

As shown in Figures 1-3, a stream of flue gas FG from the turbine 116 that has (at least) passed through the third heat exchanger HX3 may be directed to the water recovery heat exchanger WHX. Using the water recovery heat exchanger WHX, heat is transferred (e.g. rejected) from the stream of flue gas to the stream of ambient air to yield a stream of water out of the flue gas (which is, as mentioned above, predominantly steam). In hydrogen fuel systems 100 having fourth heat exchangers and fifth heat exchangers as described above, the water recovery heat exchanger WHX may be arranged to receive the stream of flue gas from at least one of the third heat exchanger, the fourth heat exchanger and the fifth heat exchanger. The third heat exchanger, fourth heat exchanger and fifth heat exchanger may be arranged in the flue gas stream FG in series or in parallel.

The stream of water LW may be directed to a cooling system (not shown) for the combustion chamber 114 and/or the turbine 116. For example, a cooling system of the turbine 116 may utilise the (liquid) water by injecting the water through inner channels of the turbine blades. In another example, a cooling system of the combustion chamber 114 may utilise the water by injecting the water into the combustion chamber 114 to lower the flame temperature.

After leaving the second heat exchanger HX2, the stream of gaseous nitrogen GN is directed to a fire suppression system 108 to be stored for use as a cooling medium (e.g. for cooling one or more of a tank of liquid hydrogen fuel, electronics, superconducting electronics, turbine blades, etc), as a fire suppressant, and/or as a fire prevention agent. Thus, an aircraft having the described hydrogen fuel system may not require a separate source of nitrogen for fire suppression, lowering the overall weight of the aircraft.

In any of the examples shown in Figures 1 to 3, different types of heat exchangers HX may be used in this configuration based on the hydrogen and oxygen phase at its entrance (liquid, gas or a two-phase flow). Under different conditions a system controller may be configured to modify the system operating points, for example by controlling the liquid hydrogen, air or working fluid flow entering the heat exchangers HX through a bypass valve (not shown in the Figures). In some examples, the amount of working fluid or ambient air flowing into the fourth heat exchanger HXA may be controlled through a (bypass) valve or radiator baffle (not shown in the Figures) to ensure a proper working fluid temperature under different ambient conditions. Depending on the configuration, the heat exchangers HX may include components for moisture removal (such as a condenser, water separator and reheater) to protect from possible freezing issues.

In one example, the first heat exchanger HX1 could instead be configured to produce a stream of liquid nitrogen instead of a stream of gaseous nitrogen, where the stream of liquid nitrogen is then heated in the second heat exchanger HX2 to produce the stream of gaseous nitrogen GN.

The examples described herein and discussed with reference to Figures 1 to 3 provide a more sustainable architecture and use of oxy-fuel combustion. As a result of combusting pure oxygen and pure hydrogen, no harmful compounds such as nitrogen oxides are produced in the combustion chamber 114 and thus the described examples provide for a higher gas turbine efficiency. Moreover, superheating the pure oxygen and pure hydrogen before combustion (utilising otherwise waste heat energy) further improves gas turbine efficiency.

Additionally, some examples are configured to produce a source of nitrogen which in turn can be used as a fire suppression agent or fire protection agent. There is therefore no need for compressed nitrogen tanks for fire suppression, which in turn results in a lower aircraft weight. Due to the cryogenic temperature of the air, air pollutants are in the solid state, meaning that the pollutant (CO₂, hydrocarbons, aromatics, etc.) separation process is significantly easier.

As can be seen in the Figures, since only one compressor 112 is needed, this results in a lower aircraft weight. Since only one turbine 116 is needed, this also results in a lower aircraft weight. Thus, the examples described herein also provide a simpler gas turbine design, that is cheaper, more reliable, has a higher energy efficiency and lower maintenance costs.

The systems described above may also comprise additional auxiliary equipment such as pumps, solid separator, dehumidifiers, valves, splitters etc, which are not shown in the Figures.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A system (100) comprising:
a gas turbine (110) having a combustion chamber (114) and a turbine (116), the gas turbine being configured to receive a stream of gaseous oxygen (GO) and a stream of gaseous hydrogen (GH), and to output a stream of flue gas (FG);
a superheating heat exchanger (HX3) configured to receive the stream of flue gas from the turbine and at least one of the stream of gaseous hydrogen and the stream of gaseous oxygen, wherein the superheating heat exchanger is configured to transfer heat between the stream of flue gas and the stream of gaseous hydrogen and/or the stream of gaseous oxygen to superheat the stream of hydrogen and/or the stream of oxygen; wherein the system is configured to direct the stream of hydrogen and the stream of oxygen to the combustion chamber, and wherein at least one of the stream of hydrogen and the stream of oxygen is superheated;
a water recovery heat exchanger (WHX) configured to receive the stream of flue gas from the turbine, wherein the system is configured to direct the stream of flue gas to the water recovery heat exchanger via the superheating heat exchanger; and wherein the water recovery heat exchanger is configured to receive the stream of flue gas and a stream of ambient air, and configured to transfer heat from the stream of flue gas to the stream of ambient air to yield a stream of water;
wherein the system is configured to direct the stream of water to a cooling system for the combustion chamber and/or the turbine.

2. The system of claim 1, further comprising:
a first heat exchanger (HX1) configured to receive a first stream of compressed air (CA) and a stream of liquid hydrogen (LH), wherein the first heat exchanger is configured to transfer heat between the first stream of compressed air and the stream of liquid hydrogen to yield a stream of liquid oxygen (LO) and the stream of gaseous hydrogen;
a second heat exchanger (HX2) configured to heat the stream of liquid oxygen to yield the stream of gaseous oxygen.

3. The system of claim 1, wherein the superheating heat exchanger is configured to receive one of the stream of gaseous hydrogen and the stream of gaseous oxygen; and
wherein the system comprises a fourth heat exchanger configured to receive a stream of flue gas from the turbine and the other of the stream of gaseous hydrogen and the stream of gaseous oxygen, wherein the fourth heat exchanger is configured to transfer heat between the flue gas and the stream of gaseous hydrogen or the stream of gaseous oxygen to superheat the stream of hydrogen or the stream of oxygen;
wherein the superheating heat exchanger and the fourth heat exchanger are arranged to receive the streams of flue gas from the turbine in series or in parallel; and
wherein the system is configured to direct the stream of superheated oxygen and the stream of superheated hydrogen to the combustion chamber.

4. The system of claim 2 or 3, comprising a fuel cell (102), and wherein the system is configured to:
direct a first portion of the stream of gaseous hydrogen (GH1) to the superheating heat exchanger or the combustion chamber; and
direct a second portion of the stream of gaseous hydrogen (GH2) to the fuel cell, preferably via the second heat exchanger.

5. The system of claim 4, wherein the system is configured to direct a stream of residual hydrogen (RH) from the fuel cell to the combustion chamber; or
wherein the system is configured to direct a stream of residual hydrogen (RH) from the fuel cell to the superheating heat exchanger to superheat the stream of residual hydrogen, and wherein the system is configured to direct the stream of superheated residual hydrogen to the combustion chamber.

6. The system of claim 5 when dependent on claim 4, wherein the system comprises a fifth heat exchanger configured to receive a stream of flue gas from the turbine and the stream of residual hydrogen from the fuel cell, wherein the fifth heat exchanger is configured to transfer heat between the stream of flue gas and the stream of residual hydrogen to superheat the stream of residual hydrogen;
wherein the third heat exchanger, the fourth heat exchanger and the fifth heat exchanger are arranged to receive the streams of flue gas from the turbine in series or in parallel; and
wherein the system is configured to direct the stream of superheated residual hydrogen to the combustion chamber.

7. A method comprising:
combusting a stream of gaseous oxygen (GO) and a stream of gaseous hydrogen (GH) in a combustion chamber (114) of a gas turbine (110);
directing a stream of flue gas (FG) from the turbine (116) and at least one of the stream of gaseous hydrogen and the stream of gaseous oxygen to a superheating heat exchanger (HX3);
transferring heat, using the superheating heat exchanger, between the stream of flue gas and the stream of gaseous hydrogen and/or the stream of gaseous oxygen to superheat the stream of hydrogen and/or the stream of oxygen;
directing the stream of hydrogen and the stream of oxygen to the combustion chamber, wherein at least one of the stream of hydrogen and the stream of oxygen is superheated;
directing the stream of flue gas (FG) from the superheating heat exchanger and a stream of ambient air (AA) to a water recovery heat exchanger (WHX), wherein the water recovery heat exchanger transfer heat from the stream of flue gas to the stream of ambient air to yield a stream of water; and
directing the stream of water to a cooling system for the combustion chamber of the gas turbine and/or the turbine of the gas turbine.

8. The method of claim 7 comprising:
directing a first stream of compressed air (CA) and a stream of liquid hydrogen (LH) to a first heat exchanger (HX1);
transferring heat, using the first heat exchanger, between the first stream of compressed air and the stream of liquid hydrogen to yield a stream of liquid oxygen (LO) and a stream of gaseous hydrogen (GH);
directing the stream of liquid oxygen to a second heat exchanger (HX2);
transferring heat, using the second heat exchanger, to the stream of liquid oxygen to yield a stream of gaseous oxygen (GO).

9. The method of claim 8 comprising:
directing a stream of flue gas from the turbine of the gas turbine and one of the stream of gaseous hydrogen and the stream of gaseous oxygen to the superheating heat exchanger;
directing a stream of flue gas from the turbine of the gas turbine and the other of the stream of gaseous hydrogen and the stream of gaseous oxygen to a fourth heat exchanger;
wherein the superheating heat exchanger and the fourth heat exchanger are arranged to receive the streams of flue gas from the turbine in series or in parallel;
transferring heat, using the superheating heat exchanger, between the stream of flue gas and the stream of gaseous hydrogen or the stream of gaseous oxygen to superheat the stream of hydrogen or the stream of oxygen;
transferring heat, using the fourth heat exchanger, between the stream of flue gas and the stream of gaseous oxygen or the stream of gaseous hydrogen to superheat the stream of oxygen or the stream of hydrogen; and
directing the stream of superheated oxygen and the stream of superheated hydrogen to a combustion chamber of the gas turbine.

10. The method of claim 8 or 9 comprising:
directing a first portion of the stream of gaseous hydrogen (GH1) from the first heat exchanger to the superheating heat exchanger or the combustion chamber; and
directing a second portion of the stream of gaseous hydrogen (GH2) from the first heat exchanger to a fuel cell (102), preferably via the second heat exchanger.

11. The method of claim 10 comprising:
directing a stream of residual hydrogen (RH) from the fuel cell to the combustion chamber; or
directing a stream of residual hydrogen (RH) from the fuel cell to the superheating heat exchanger;
transferring heat, using the superheating heat exchanger, between the stream of flue gas and the stream of residual hydrogen to superheat the stream of residual hydrogen; and
directing the stream of superheated residual hydrogen to the combustion chamber.

12. The method of claim 10 comprising:
directing a stream of flue gas from the turbine and the stream of residual hydrogen from the fuel cell to a fifth heat exchanger;
wherein the third heat exchanger, the fourth heat exchanger and the fifth heat exchanger are arranged to receive the streams of flue gas from the turbine in series or in parallel;
transferring heat, using the fifth heat exchanger, between the stream of flue gas and the stream of residual hydrogen to superheat the stream of residual hydrogen; and
directing the stream of superheated residual hydrogen to the combustion chamber.

## Patentansprüche

1. System (100), umfassend:
eine Gasturbine (110) mit einer Brennkammer (114) und einer Turbine (116), wobei die Gasturbine so konfiguriert ist, dass sie einen Strom aus gasförmigem Sauerstoff (GO) und einen Strom aus gasförmigem Wasserstoff (GH) empfängt und einen Strom aus Rauchgas (FG) ausgibt;
einen Überhitzungswärmetauscher (HX3), der so konfiguriert ist, dass er den Rauchgasstrom von der Turbine und mindestens einen von dem Strom aus gasförmigem Wasserstoff und dem Strom aus gasförmigem Sauerstoff aufnimmt, wobei der Überhitzungswärmetauscher so konfiguriert ist, dass er Wärme zwischen dem Rauchgasstrom und dem Strom aus gasförmigem Wasserstoff und/oder dem Strom aus gasförmigem Sauerstoff überträgt, um den Wasserstoffstrom und/oder den Sauerstoffstrom zu überhitzen; wobei das System so konfiguriert ist, dass es den Wasserstoffstrom und den Sauerstoffstrom in die Verbrennungskammer leitet, und wobei mindestens einer der Ströme (der Wasserstoffstrom und/oder der Sauerstoffstrom), überhitzt wird;
einen Wasserrückgewinnungs-Wärmetauscher (WHX), der so konfiguriert ist, dass er den Rauchgasstrom von der Turbine aufnimmt, wobei das System so konfiguriert ist, dass es den Rauchgasstrom über den Überhitzungswärmetauscher zum Wasserrückgewinnungs-Wärmetauscher leitet; und wobei der Wasserrückgewinnungs-Wärmetauscher so konfiguriert ist, dass er den Rauchgasstrom und einen Umgebungsluftstrom aufnimmt, und so konfiguriert ist, dass er Wärme vom Rauchgasstrom auf den Umgebungsluftstrom überträgt, um einen Wasserstrom zu erzeugen;
wobei das System so konfiguriert ist, dass es den Wasserstrom zu einem Kühlsystem für die Brennkammer und/oder die Turbine leitet.

2. System nach Anspruch 1, ferner umfassend:
einen ersten Wärmetauscher (HX1), der so konfiguriert ist, dass er einen ersten Strom aus komprimierter Luft (CA) und einen Strom aus flüssigem Wasserstoff (LH) empfängt, wobei der erste Wärmetauscher so konfiguriert ist, dass er Wärme zwischen dem ersten Strom aus komprimierter Luft und dem Strom aus flüssigem Wasserstoff überträgt, um einen Strom aus flüssigem Sauerstoff (LO) und den Strom aus gasförmigem Wasserstoff zu erzeugen;
einen zweiten Wärmetauscher (HX2), der so konfiguriert ist, dass er den Strom aus flüssigem Sauerstoff erhitzt, um den Strom aus gasförmigem Sauerstoff zu erzeugen.

3. System nach Anspruch 1, wobei der Überhitzungswärmetauscher so konfiguriert ist, dass er einen der Ströme aus gasförmigem Wasserstoff oder aus gasförmigem Sauerstoff aufnimmt; und wobei das System einen vierten Wärmetauscher umfasst, der so konfiguriert ist, dass er einen Rauchgasstrom von der Turbine und den anderen von dem Strom aus gasförmigem Wasserstoff und dem Strom aus gasförmigem Sauerstoff aufnimmt, wobei der vierte Wärmetauscher so konfiguriert ist, dass er Wärme zwischen dem Rauchgas und dem Strom aus gasförmigem Wasserstoff oder dem Strom aus gasförmigem Sauerstoff überträgt, um den Strom aus Wasserstoff oder den Strom aus Sauerstoff zu überhitzen;
wobei der Überhitzungswärmetauscher und der vierte Wärmetauscher so angeordnet sind, dass sie die Rauchgasströme von der Turbine in Reihe oder parallel aufnehmen; und
wobei das System so konfiguriert ist, dass es den Strom aus überhitztem Sauerstoff und den Strom aus überhitztem Wasserstoff zur Brennkammer leitet.

4. System nach Anspruch 2 oder 3, umfassend eine Brennstoffzelle (102), und wobei das System so konfiguriert ist, dass es:
einen ersten Teil des Stroms aus gasförmigem Wasserstoff (GH1) zum Überhitzungswärmetauscher oder zur Brennkammer leitet; und
einen zweiten Teil des Stroms aus gasförmigem Wasserstoff (GH2) zur Brennstoffzelle leitet, vorzugsweise über den zweiten Wärmetauscher.

5. System nach Anspruch 4, wobei das System so konfiguriert ist,
dass es einen Strom von Restwasserstoff (RH) aus der Brennstoffzelle zur Brennkammer leitet; oder
wobei das System so konfiguriert ist, dass es einen Strom von Restwasserstoff (RH) von der Brennstoffzelle zum Überhitzungswärmetauscher leitet, um den Strom von Restwasserstoff zu überhitzen, und wobei das System so konfiguriert ist, dass es den Strom von überhitztem Restwasserstoff zur Verbrennungskammer leitet.

6. System nach Anspruch 5, sofern abhängig von Anspruch 4, wobei das System einen fünften Wärmetauscher umfasst, der so konfiguriert ist, dass er einen Rauchgasstrom von der Turbine und den Restwasserstoffstrom von der Brennstoffzelle aufnimmt, wobei der fünfte Wärmetauscher so konfiguriert ist, dass er Wärme zwischen dem Rauchgasstrom und dem Restwasserstoffstrom überträgt, um den Restwasserstoffstrom zu überhitzen;
wobei der dritte Wärmetauscher, der vierte Wärmetauscher und der fünfte Wärmetauscher so angeordnet sind, dass sie die Rauchgasströme von der Turbine in Reihe oder parallel aufnehmen; und
wobei das System so konfiguriert ist, dass es den Strom aus überhitztem Restwasserstoff zur Brennkammer leitet.

7. Verfahren, Folgendes umfassend:
Verbrennung eines Stroms aus gasförmigem Sauerstoff (GO) und eines Stroms aus gasförmigem Wasserstoff (GH) in einer Brennkammer (114) einer Gasturbine (110);
Leiten eines Rauchgasstroms (FG) aus der Turbine (116) und mindestens eines der Ströme aus gasförmigem Wasserstoff und gasförmigem Sauerstoff zu einem Überhitzungswärmetauscher (HX3);
Übertragen von Wärme zwischen dem Rauchgasstrom und dem Strom aus gasförmigem Wasserstoff und/oder dem Strom aus gasförmigem Sauerstoff mithilfe des Überhitzungswärmetauschers, um den Wasserstoffstrom und/oder den Sauerstoffstrom zu überhitzen;
Leiten des Wasserstoffstroms und des Sauerstoffstroms in die Verbrennungskammer, wobei mindestens einer der Ströme (der Wasserstoffstrom und/oder der Sauerstoffstrom) überhitzt wird;
Leiten des Rauchgasstroms (FG) aus dem Überhitzungswärmetauscher und eines Umgebungsluftstroms (AA) zu einem Wasserrückgewinnungs-Wärmetauscher (WHX), wobei der Wasserrückgewinnungs-Wärmetauscher Wärme aus dem Rauchgasstrom an den Umgebungsluftstrom überträgt, um einen Wasserstrom zu erzeugen; und
Leiten des Wasserstroms zu einem Kühlsystem für die Brennkammer der Gasturbine und/oder die Turbine der Gasturbine.

8. Verfahren nach Anspruch 7, umfassend:
Leiten eines ersten Stroms von Druckluft (CA) und eines Stroms aus flüssigem Wasserstoff (LH) zu einem ersten Wärmetauscher (HX1);
Übertragen von Wärme mithilfe des ersten Wärmetauschers zwischen dem ersten Druckluftstrom und dem Strom aus flüssigem Wasserstoff, um einen Strom aus flüssigem Sauerstoff (LO) und einen Strom aus gasförmigem Wasserstoff (GH) zu erzeugen;
Leiten des Stroms aus flüssigem Wasserstoff zu einem zweiten Wärmetauscher (HX2);
Übertragen von Wärme mithilfe des zweiten Wärmetauschers auf den Strom aus flüssigem Sauerstoff, um einen Strom aus gasförmigem Sauerstoff (GO) zu erzeugen.

9. Verfahren nach Anspruch 8, umfassend:
Leiten eines Rauchgasstroms aus der Turbine der Gasturbine und eines Stroms aus gasförmigem Wasserstoff oder eines Stroms aus gasförmigem Sauerstoff zum Überhitzungswärmetauscher;
Leiten eines Rauchgasstroms aus der Turbine der Gasturbine und des anderen Stroms aus gasförmigem Wasserstoff oder aus gasförmigem Sauerstoff zu einem vierten Wärmetauscher;
wobei der Überhitzungswärmetauscher und der vierte Wärmetauscher so angeordnet sind, dass sie die Rauchgasströme von der Turbine in Reihe oder parallel aufnehmen;
Übertragen von Wärme zwischen dem Rauchgasstrom und dem Strom aus gasförmigem Wasserstoff oder dem Strom aus gasförmigem Sauerstoff mithilfe des Überhitzungswärmetauschers, um den Wasserstoffstrom oder den Sauerstoffstrom zu überhitzen;
Übertragen von Wärme zwischen dem Rauchgasstrom und dem Strom aus gasförmigem Sauerstoff oder dem Strom aus gasförmigem Wasserstoff mithilfe des vierten Wärmetauschers, um den Sauerstoffstrom oder den Wasserstoffstrom zu überhitzen; und
Leiten des Stroms aus überhitztem Sauerstoff und des Stroms aus überhitztem Wasserstoff zur Brennkammer der Gasturbine.

10. Verfahren nach Anspruch 8 oder 9, umfassend:
Leiten eines ersten Teils des Stroms aus gasförmigem Wasserstoff (GH1) vom ersten Wärmetauscher zum Überhitzungswärmetauscher oder zur Brennkammer; und
Leiten eines zweiten Teils des Stroms aus gasförmigem Wasserstoff (GH2) vom ersten Wärmetauscher zur Brennstoffzelle (102), vorzugsweise über den zweiten Wärmetauscher.

11. Verfahren nach Anspruch 10, umfassend:
Leiten eines Stroms von Restwasserstoff (RH) aus der Brennstoffzelle zur Brennkammer; oder
Leiten eines Stroms von Restwasserstoff (RH) aus der Brennstoffzelle zum Überhitzungswärmetauscher;
Übertragen von Wärme zwischen dem Rauchgasstrom und dem Restwasserstoffstrom mithilfe des Überhitzungswärmetauschers, um den Restwasserstoffstrom zu überhitzen; und
Leiten des Stroms aus überhitztem Restwasserstoff zur Brennkammer.

12. Verfahren nach Anspruch 10, umfassend:
Leiten eines Rauchgasstroms von der Turbine und des Restwasserstoffstroms von der Brennstoffzelle zu einem fünften Wärmetauscher;
wobei der dritte Wärmetauscher, der vierte Wärmetauscher und der fünfte Wärmetauscher so angeordnet sind, dass sie die Rauchgasströme von der Turbine in Reihe oder parallel aufnehmen;
Übertragen von Wärme mithilfe des fünften Wärmetauschers zwischen dem Rauchgasstrom und dem Restwasserstoffstrom, um den Restwasserstoffstrom zu überhitzen; und
Leiten des Stroms aus überhitztem Restwasserstoff zur Brennkammer.

## Revendications

1. Système (100) comprenant :
une turbine à gaz (110) présentant une chambre de combustion (114) et une turbine (116), la turbine à gaz étant configurée pour recevoir un flux d'oxygène gazeux (GO) et un flux d'hydrogène gazeux (GH), et pour délivrer en sortie un flux de gaz de combustion (FG) ;
un échangeur de chaleur de surchauffe (HX3) configuré pour recevoir le flux de gaz de combustion à partir de la turbine et au moins l'un du flux d'hydrogène gazeux et du flux d'oxygène gazeux, dans lequel l'échangeur de chaleur de surchauffe est configuré pour transférer de la chaleur entre le flux de gaz de combustion et le flux d'hydrogène gazeux et/ou le flux d'oxygène gazeux afin de surchauffer le flux d'hydrogène et/ou le flux d'oxygène ; dans lequel le système est configuré pour diriger le flux d'hydrogène et le flux d'oxygène vers la chambre de combustion, et dans lequel au moins l'un du flux d'hydrogène et du flux d'oxygène est surchauffé ;
un échangeur de chaleur de récupération d'eau (WHX) configuré pour recevoir le flux de gaz de combustion à partir de la turbine, dans lequel le système est configuré pour diriger le flux de gaz de combustion vers l'échangeur de chaleur de récupération d'eau par l'intermédiaire de l'échangeur de chaleur de surchauffe ; et dans lequel l'échangeur de chaleur de récupération d'eau est configuré pour recevoir le flux de gaz de combustion et un flux d'air ambiant, et configuré pour transférer de la chaleur à partir du flux de gaz de combustion au flux d'air ambiant afin de produire un flux d'eau ;
dans lequel le système est configuré pour diriger le flux d'eau vers un système de refroidissement pour la chambre de combustion et/ou la turbine.

2. Système selon la revendication 1, comprenant en outre :
un premier échangeur de chaleur (HX1) configuré pour recevoir un premier flux d'air comprimé (CA) et un flux d'hydrogène liquide (LH), dans lequel le premier échangeur de chaleur est configuré pour transférer de la chaleur entre le premier flux d'air comprimé et le flux d'hydrogène liquide afin de produire un flux d'oxygène liquide (LO) et le flux d'hydrogène gazeux ;
un deuxième échangeur de chaleur (HX2) configuré pour chauffer le flux d'oxygène liquide afin de produire le flux d'oxygène gazeux.

3. Système selon la revendication 1, dans lequel l'échangeur de chaleur de surchauffe est configuré pour recevoir l'un du flux d'hydrogène gazeux et du flux d'oxygène gazeux ; et
dans lequel le système comprend un quatrième échangeur de chaleur configuré pour recevoir un flux de gaz de combustion à partir de la turbine et l'autre du flux d'hydrogène gazeux et du flux d'oxygène gazeux, dans lequel le quatrième échangeur de chaleur est configuré pour transférer de la chaleur entre les gaz de combustion et le flux d'hydrogène gazeux ou le flux d'oxygène gazeux afin de surchauffer le flux d'hydrogène ou le flux d'oxygène ;
dans lequel l'échangeur de chaleur de surchauffe et le quatrième échangeur de chaleur sont conçus pour recevoir les flux de gaz de combustion à partir de la turbine en série ou en parallèle ; et
dans lequel le système est configuré pour diriger le flux d'oxygène surchauffé et le flux d'hydrogène surchauffé vers la chambre de combustion.

4. Système selon la revendication 2 ou 3, comprenant un réservoir carburant (102), et dans lequel le système est configuré pour :
diriger une première partie du flux d'hydrogène gazeux (GH1) vers l'échangeur de chaleur de surchauffe ou la chambre de combustion ; et
diriger une seconde partie du flux d'hydrogène gazeux (GH2) vers le réservoir carburant, de préférence par l'intermédiaire du deuxième échangeur de chaleur.

5. Système selon la revendication 4, dans lequel le système est configuré pour diriger un flux d'hydrogène résiduel (RH) à partir du réservoir carburant vers la chambre de combustion ; ou
dans lequel le système est configuré pour diriger un flux d'hydrogène résiduel (RH) à partir du réservoir carburant vers l'échangeur de chaleur de surchauffe afin de surchauffer le flux d'hydrogène résiduel, et dans lequel le système est configuré pour diriger le flux d'hydrogène résiduel surchauffé vers la chambre de combustion.

6. Système selon la revendication 5 lorsqu'elle dépend de la revendication 4, dans lequel le système comprend un cinquième échangeur de chaleur configuré pour recevoir un flux de gaz de combustion à partir de la turbine et le flux d'hydrogène résiduel à partir du réservoir carburant, dans lequel le cinquième échangeur de chaleur est configuré pour transférer de la chaleur entre le flux de gaz de combustion et le flux d'hydrogène résiduel afin de surchauffer le flux d'hydrogène résiduel ;
dans lequel le troisième échangeur de chaleur, le quatrième échangeur de chaleur et le cinquième échangeur de chaleur sont conçus pour recevoir les flux de gaz de combustion à partir de la turbine en série ou en parallèle ; et
dans lequel le système est configuré pour diriger le flux d'hydrogène résiduel surchauffé vers la chambre de combustion.

7. Procédé comprenant :
la combustion d'un flux d'oxygène gazeux (GO) et d'un flux d'hydrogène gazeux (GH) dans une chambre de combustion (114) d'une turbine à gaz (110) ;
la direction d'un flux de gaz de combustion (FG) à partir de la turbine (116) et d'au moins l'un du flux d'hydrogène gazeux et du flux d'oxygène gazeux vers un échangeur de chaleur de surchauffe (HX3) ;
le transfert de chaleur, à l'aide de l'échangeur de chaleur de surchauffe, entre le flux de gaz de combustion et le flux d'hydrogène gazeux et/ou le flux d'oxygène gazeux afin de surchauffer le flux d'hydrogène et/ou le flux d'oxygène ;
la direction du flux d'hydrogène et le flux d'oxygène vers la chambre de combustion, dans lequel au moins l'un du flux d'hydrogène et du flux d'oxygène est surchauffé ;
la direction du flux de gaz de combustion (FG) à partir de l'échangeur de chaleur de surchauffe et d'un flux d'air ambiant (AA) vers un échangeur de chaleur de récupération d'eau (WHX), dans lequel l'échangeur de chaleur de récupération d'eau transfère de la chaleur à partir du flux de gaz de combustion au flux d'air ambiant afin de produire un flux d'eau ; et
la direction du flux d'eau vers un système de refroidissement de la chambre de combustion de la turbine à gaz et/ou de la turbine de la turbine à gaz.

8. Procédé selon la revendication 7 comprenant :
la direction d'un premier flux d'air comprimé (CA) et d'un flux d'hydrogène liquide (LH) vers un premier échangeur de chaleur (HX1) ;
le transfert de chaleur, à l'aide du premier échangeur de chaleur, entre le premier flux d'air comprimé et le flux d'hydrogène liquide afin de produire un flux d'oxygène liquide (LO) et un flux d'hydrogène gazeux (GH) ;
la direction du flux d'oxygène liquide vers un deuxième échangeur de chaleur (HX2) ;
le transfert de chaleur, à l'aide du deuxième échangeur de chaleur, au flux d'oxygène liquide afin de produire un flux d'oxygène gazeux (GO).

9. Procédé selon la revendication 8 comprenant :
la direction d'un flux de gaz de combustion à partir de la turbine de la turbine à gaz et de l'un du flux d'hydrogène gazeux et du flux d'oxygène gazeux vers l'échangeur de chaleur de surchauffe ;
la direction d'un flux de gaz de combustion à partir de la turbine de la turbine à gaz et de l'autre du flux d'hydrogène gazeux et du flux d'oxygène gazeux vers un quatrième échangeur de chaleur ;
dans lequel l'échangeur de chaleur de surchauffe et le quatrième échangeur de chaleur sont conçus pour recevoir les flux de gaz de combustion à partir de la turbine en série ou en parallèle ;
le transfert de chaleur, à l'aide de l'échangeur de chaleur de surchauffe, entre le flux de gaz de combustion et le flux d'hydrogène gazeux ou le flux d'oxygène gazeux afin de surchauffer le flux d'hydrogène ou le flux d'oxygène ;
le transfert de chaleur, à l'aide du quatrième échangeur de chaleur, entre le flux de gaz de combustion et le flux d'oxygène gazeux ou le flux d'hydrogène gazeux afin de surchauffer le flux d'oxygène ou le flux d'hydrogène ; et
la direction du flux d'oxygène surchauffé et du flux d'hydrogène surchauffé vers une chambre de combustion de la turbine à gaz.

10. Procédé selon la revendication 8 ou 9 comprenant :
la direction d'une première partie du flux d'hydrogène gazeux (GH1) à partir du premier échangeur de chaleur vers l'échangeur de chaleur de surchauffe ou la chambre de combustion ; et
la direction d'une seconde partie du flux d'hydrogène gazeux (GH2) à partir du premier échangeur de chaleur vers un réservoir carburant (102), de préférence par l'intermédiaire du deuxième échangeur de chaleur.

11. Procédé de la revendication 10 comprenant :
la direction d'un flux d'hydrogène résiduel (RH) à partir du réservoir carburant vers la chambre de combustion ; ou
la direction d'un flux d'hydrogène résiduel (RH) à partir du réservoir carburant vers l'échangeur de chaleur de surchauffe ;
le transfert de chaleur, à l'aide de l'échangeur de chaleur de surchauffe, entre le flux de gaz de combustion et le flux d'hydrogène résiduel afin de surchauffer le flux d'hydrogène résiduel ; et
la direction du flux d'hydrogène résiduel surchauffé vers la chambre de combustion.

12. Procédé de la revendication 10 comprenant :
la direction d'un flux de gaz de combustion à partir de la turbine et du flux d'hydrogène résiduel à partir du réservoir carburant vers un cinquième échangeur de chaleur ;
dans lequel le troisième échangeur de chaleur, le quatrième échangeur de chaleur et le cinquième échangeur de chaleur sont conçus pour recevoir les flux de gaz de combustion à partir de la turbine en série ou en parallèle ;
le transfert de chaleur, à l'aide du cinquième échangeur de chaleur, entre le flux de gaz de combustion et le flux d'hydrogène résiduel afin de surchauffer le flux d'hydrogène résiduel ; et
la direction du flux d'hydrogène résiduel surchauffé vers la chambre de combustion.
